# EUROPÄISCHE PATENTSCHRIFT

(11) **EP 3 322 053 B1**
(45) Veröffentlichungstag und Bekanntmachung des Hinweises auf die Patenterteilung: **16.03.2022**
(21) Anmeldenummer: 16199001.5
(22) Anmeldetag: 15.11.2016
(51) Int. Cl.: H02G 1/12

(54) **VORRICHTUNG UND VERFAHREN ZUM ENTFERNEN EINER UMHÜLLUNG ELEKTRISCHER LEITER**
APPARATUS AND METHOD FOR REMOVING A SHEATH FOR AN ELECTRICAL CONDUCTOR
DISPOSITIF ET PROCÉDÉ DE RETRAIT D'UNE GAINE DE CONDUCTEURS ÉLECTRIQUES

(43) Veröffentlichungstag der Anmeldung: 16.05.2018
(60) Teilanmeldung: 22151053.0
(73) Patentinhaber: Schleuniger AG, 3608 Thun (CH)
(72) Erfinder: MESSINA, Carmelo, 6343 Rotkreuz (CH); WIDMER, Roman, 8903 Birmensdorf (CH); FURRER, Jörg, 6048 Horw (CH); IMHOLZ, Klemens, 6300 Zug (CH)
(74) Vertreter: Patentbüro Paul Rosenich AG

(56) Entgegenhaltungen:
- EP-A1- 2 871 734
- EP-A1- 3 089 294
- WO-A1-97/17626
- CN-A- 102 130 410
- DE-A1- 4 336 539
- DE-B1- 1 490 940
- JP-U- S5 077 887
- Anonymous: "Verbindungstechnik - Wikipedia", , 15 December 2017 (2017-12-15), XP055568790, Retrieved from the Internet: URL:https://de.wikipedia.org/w/index.php?t itle=Verbindungstechnik&oldid=171987411 [retrieved on 2019-03-13]

## Beschreibung

Die Erfindung betrifft eine Vorrichtung zum Entfernen einer Umhüllung elektrischer Leiter eines vorzugsweise mehradrigen Kabels, vorzugsweise einer zwischen einem Schirm oder einer Isolierung und den inneren Leitern befindlichen Folie, umfassend zumindest eine Halteanordnung/Klemmvorrichtung zum Klemmen des Kabels und einer vorzugsweise um die Kabellängsachse drehbaren Messeranordnung für die Umhüllung, gemäss dem Oberbegriff des Anspruchs 1, sowie ein entsprechendes Verfahren zum Entfernen einer inneren Umhüllung elektrischer Leiter eines mehradrigen Kabels, vorzugsweise einer zwischen einem Schirm oder einer Isolierung und den inneren Leitern befindlichen Folie, umfassend das Klemmen des Kabels und das Einschneiden der inneren Umhüllung.

Die Litzen von Kabeln, insbesondere bei Kabeln mit mehreren Litzen, sind manchmal mit einer Folie umwickelt. Diese muss für die Bearbeitung der Litzen entfernt werden, was sehr schwierig sein kann, wozu der Wickelwinkel, die Dicke der Folie, das Folienmaterial, die Überlappung, etc. beitragen. Im Querschnitt gesehen stellt sich die Form der Folie nicht rund dar, da sie sich zumindest teilweise an die darunterliegenden Litzen anschmiegt und derart bei einem Beispiel mit vier Litzen im Querschnitt gesehen einen Umriss etwa in Kleeblattform annimmt. Selbstverständlich sind auch Kabel mit mehr oder weniger Litzen möglich.

Herkömmliche Lösungen sehen beispielsweise einen "Blas-Bürst-Mechanismus" vor, wie er beispielsweise in der EP 2871734 A1 offenbart ist. Dabei ist eine buchsenförmige Aufnahme für das zu bearbeitende Ende des Kabels vorgesehen, ebenso wie ein axial in Bezug auf die Achse der zentralen Öffnung relativ zur Aufnahme bewegbarer Arbeitskopf, welcher zumindest eine zentrale, auf das Ende des Kabels ausgerichtete Druckluftdüse aufweist. Damit kann in sehr schonender Weise rasch die Folienumhüllung der inneren Leiter geöffnet werden, in dem sie durch den Druckluftstoss oder Druckluftstrom zum Aufplatzen oder zumindest zum Aufblähen gebracht wird. Mittels eines rotierenden Schneid- oder Fräskopfes, in dessen rotierender Achse vorzugsweise die Druckluftdüse und die zu dieser Druckluftdüse führende Druckluftzuleitung ausgearbeitet sind, kann die abgehobene Folie dann endgültig entfernt werden. Der Bearbeitungskopf kann auch mit einer axial ausgerichteten Ringschneide versehen sein, deren Umfang jenem der inneren Leiter entspricht.

In der CH 710236 A2 ist eine Ummantelungsschneidvorrichtung mit einem rotierenden Messer für einen Aussenisolator eines Kabels offenbart. Damit wird ein Einschnitt in einer Ummantelung einer elektrischen Leitung mit Isolationsummantelung vorgenommen, zu welchem Zweck ein Scheibenschneider, eine Hebeeinheit, die den Scheibenschneider in vertikaler Richtung anhebt und absenkt, und eine Querverlagerungseinheit, die den Scheibenschneider in Links-rechts-Richtung vor- und zurückfährt vorhanden. Der Scheibenschneider wird während des Einschneidens in die Ummantelung der elektrischen Leitung von der Hebeeinheit und der Querverlagerungseinheit verlagert, derart, dass er den Umfang der elektrischen Leitung umläuft, wobei unter Verlagerung eines Kontaktpunkts des Scheibenschneiders an der Ummantelung ein Einschnitt hergestellt wird.

Vielfach wurde auch schon vorgeschlagen, dass Folien mittels Laser abisoliert werden können, wie beispielsweise in der KR 101610306 B1 offenbart.

Weitere Vorrichtungen zur Kabelbearbeitung sind ebenfalls aus der CN 102 130 410 A, der EP 3 089 294 A1 und der JP S50 77887 U bekannt. Wie immer auch der zu entfernende Abschnitt der Umhüllung eingeschnitten, perforiert oder sonst vom verbleibenden Abschnitt getrennt wird, muss der zu entfernende Abschnitt vom Kabel getrennt werden. Das Abziehen dieser Teile bedarf eines relativ hohen Krafteinsatzes, wobei die Kraft schwierig auf die Folien zu übertragen ist. Nur mittels Reibung können die Umhüllungsabschnitte nicht abgezogen werden, denn die Reibung zwischen dem Abzug und der Umhüllung ist in etwa gleich der Reibung zwischen Umhüllung und den darunterliegenden elektrischen Leitern oder anderen Kabelelementen. Es war daher die Aufgabe der vorliegenden Erfindung eine Vorrichtung bzw. ein Verfahren wie eingangs angegeben so weiterzuentwickeln, dass alle abgetrennten Abschnitte einer Umhüllung automatisiert und sicher sowie möglichst vollständig vom Kabel entfernt werden können.

Zur Lösung dieser Aufgabe dient die in Anspruch 1 definierte Vorrichtung wobei eine Abzugseinrichtung für die zumindest teilweise eingeschnittene Umhüllung in die Vorrichtung integriert ist und diese Abzugseinrichtung Abzugsmittel umfasst, die zur kraftschlüssigen Verbindung mit der Umhüllung und zur Ausübung einer Kraft auf die Umhüllung parallel zur Kabelachse ausgelegt sind. Durch die kraftschlüssige Verbindung zwischen Abzugsmittel und geschnittenem Abschnitt der Umhüllung können weitere Kräfte vermieden werden, die ein Abziehen erschweren oder diesem entgegenwirken würden.

Dabei ist vorgesehen, dass die Abzugseinrichtung zumindest eine Applikationsanordnung für jeweils zumindest ein Klebeband, zumindest ein Klebeband als Abzugsmittel, sowie Mittel zum Abziehen des zumindest einen Klebebandes mit anhaftender Umhüllung in der Längsrichtung des Kabels umfasst. Das Abziehen der eingeschnittenen Folien wird braucht relativ viel Kraft. Diese Kraft kann jedoch gut über ein Klebeband direkt auf die Folie übertragen werden. Diese erlaubt es, auch fest sitzende Umhüllungen von den darunter liegenden Teilen, wie beispielsweise Litzen, vom Kabel abzuziehen. Nach einem ersten Andrücken des Klebebandes an die geschnittenen Abschnitte der Umhüllung muss keine weitere Reibungskraft aufrechterhalten werden, die das Abziehen behindern würde. Die Klebekraft hingegen wird zum Abziehen der Umhüllung genutzt. Ein weiterer Vorteil für die Verwendung von Klebeband ist es, dass die abgezogenen Teile der Umhüllung auf dem Klebeband fixiert verbleiben, welches kontinuierlich aufgewickelt wird. Es müssen also keine Umhüllungsteile durch separate Vorrichtungen aufgesaugt oder auf andere Weise entfernt werden.

Gemäss der Erfindung ist vorgesehen, dass die Applikationsanordnung zumindest eine automatisch radial in Bezug auf das Kabel hin und vom Kabel weg bewegbare sowie in Längsrichtung des Kabels bewegbare Führungsbacke für das Klebeband umfasst. Über eine derartige Führungsbacke kann in einfacher Weise sowohl die gesicherte und punktgenaue Zuführung des Klebebandes bzw. entsprechender Abzugsmittel bewirkt werden.

Gemäss der Erfindung ist vorgesehen, dass diese Führungsbacke ein starrer Körper ist und an ihrem am Kabel zur Anlage kommenden Abschnitt mit einer elastischen Schicht versehen ist. Bevorzugt ist die Führungsbacke aus Metall gefertigt, was für lange Lebensdauer und optimale Übertragung der Andruckkräfte des Klebebandes sorgt. Die elastische Einlage hingegen sorgt im Kontaktbereich der Führungsbacke mit dem Kabel für einen guten Formschluss, um das Klebeband möglichst grossflächig anzudrücken und dabei das Kabel schonend zu umfassen.

Um das Zuführen des Klebebandes oder eines ähnlichen Abzugsmittels zu erleichtern, besteht gemäss einem weiteren optionalen Erfindungsmerkmal die Stirnseite der Führungsbacke aus einem Material mit niedrigem Reibungskoeffizienten. In baulich einfacher Weise ist dazu bevorzugt das Material der Führungsbacke auf die Stirnseite der Führungsbacke vorgezogen. Um dabei die Anpassung der Führungsbacke an den Kabelumfang nicht zu behindern, kann gegebenenfalls im vorgezogenen Material der Führungsbacke an der Stirnseite ein kleiner Ausschnitt im Bereich des Kabels ausgearbeitet sein.

Eine vorteilhafte Ausführungsform der Erfindung sieht vor, dass die Mittel zum Abziehen des Klebebands mit anhaftender Umhüllung in der Längsrichtung des Kabels durch die Zuführ- oder Speichereinrichtung für das Klebeband gebildet sind, welche zumindest zeitweise arretierbar oder dauerhaft nur in Zufuhrrichtung freigegeben ist, sowie durch einen entlang des Kabels bewegbaren Schlitten, auf welchem die Zuführ- oder Speichereinrichtung angebracht ist. Dies ermöglicht es, einfach und auch gut automatisierbar das Abziehen des Abzugsmittels mit der darauf fixierten Umhüllung durch eine Bewegung der Zuführoder Speichereinrichtung für das Klebeband entlang der Kabelachse zu bewerkstelligen.

Bevorzugt ist eine erfindungsgemässe Vorrichtung dadurch gekennzeichnet, dass die Applikationsanordnung für das Abzugsmittel zwei Anordnungen mit Führungsbacke und Zuführ- oder Speichereinrichtung für das Klebeband, vorzugsweise in Form von Klebebandrollen, auf einander gegenüberliegenden Seiten des Kabels aufweist, welche Applikationsanordnungen für eine Relativbewegung in Bezug auf das Kabel in Kabellängsrichtung auf einem entlang der Kabellängsachse vor und zurück verschiebbaren Schlitten montiert ist. Das Abziehen der eingeschnittenen Umhüllung erfordert relativ viel Kraft, welche schwierig auf die abgeschnittenen oder abgetrennten Abschnitte der Umhüllung zu übertragen ist. Durch die Verwendung von zwei Klebebändern auf einander gegenüberliegenden Seiten des Kabels wird das Kabel komplett umschlossen und werden alle Umhüllungsabschnitte vollständig umschlossen und wird die Kraft für das Abziehen auf möglichst grosser Fläche übertragen.

Eine vorteilhafte erfindungsgemässe Ausführungsform sieht weiters optional vor, dass die Applikationsanordnung einen Sensor für Markierungen auf dem Klebeband aufweist, der mit einer Auswerteeinheit für die Sensorsignale verbunden ist. Durch eine derartige Überwachung mit je nach Typ unterschiedlichen Codierungen kann geprüft werden, ob der richtige Klebebandtyp eingesetzt ist. Auch eine Prüfung des korrekten Bandtransportes ist damit möglich, sowie die Erkennung des Bandendes.

Eine bevorzugte Weiterbildung der erfindungsgemässen Vorrichtung gemäss einem der vorhergehenden Absätze ist dadurch gekennzeichnet, dass zusätzlich eine Umhüllungs-Abschabanordnung in die Vorrichtung integriert ist. Sollten also nach dem Abziehen der Umhüllung noch Reste der Umhüllung auf dem Kabel verblieben sein, können diese Reste in Richtung vom freigelegten Kabelende weg zurückgestossen werden. Für die einfache Zuführung des Kabels und die einfache Einhaltung des prozessgemässen Bearbeitungsablaufes ist es vorteilhaft, wenn dabei die Umhüllungs-Abschabanordnung vorzugsweise in Kabelvorschubrichtung vor der Messeranordnung und vorzugsweise die Abzugseinrichtung in Kabelvorschubrichtung hinter der Messeranordnung positioniert sind. Wenngleich auch die Abschabanordnung hier in Verbindung mit der erfindungsgemässen Messeranordnung beschrieben ist, ist offensichtlich, dass die Abschabanordnung prinzipiell mit jeder beliebigen Schneidanordnung oder Abtrennanordnung für die zu entfernende Umhüllung kombinierbar ist. So kann auch bei Schneidanordnungen auf Basis von Schneide-Lasern ein Zurückstossen verbliebener Reste der Umhüllung vorteilhaft sein, ebenso wie bei Trennanordnungen mit Perforierung der Umhüllung und anschliessendem Abreissen und Abziehen des Endstücks der Umhüllung.

Eine vorteilhafte Ausführungsform dieser Vorrichtung weist eine Abschabanordnung mit einem Schaberkopf mit zumindest zwei, vorzugsweise vier, zentrisch um die inneren Leiter des Kabels schliessbare Formbacken auf. Diese Formbacken bilden in geschlossener, d.h. maximal angenäherter Stellung zusammen eine vorzugsweise runde Durchgangsöffnung für die Anordnung der inneren Leiter des Kabels, wobei diese auf den Radius von deren Hüllkreis einstellbar ist. Mit einem derartigen Schaberkopf mit ähnlich einer Fotoblende zusammenwirkenden Formbacken können verbleibende Reste der Umhüllung einfach und möglichst vollständig zurückgeschoben werden.

Gemäss einem weiteren optionalen Erfindungsmerkmal besteht jede Formbacke aus einem Tragkörper und einem darauf befestigten Schaber wobei jeder Tragkörper zumindest eine auf zumindest eine benachbarte Formbacke gerichtete Dichtung aufweist, derart dass zwischen Schabern, Tragkörpern, und Dichtungen eine zumindest fast luftdichte Kammer um das Kabel gebildet ist, welche mit zumindest einer Druckluftzufuhr verbunden ist. Der Begriff Schaber umfasst dabei jedes Element mit einer scharfen Kante, die eine Schabwirkung parallel zum Kabel ausüben kann, ohne jedoch das Kabel zu verletzen. Noch an den inneren Leitern, Litzen oder sonstigen Teilen des Kabels verbliebene Reste der Umhüllung können so durch einen oder mehrere Druckluftstösse von der Unterlage abgehoben und anschliessend durch die Schaber auf den Formbacken zurückgestossen werden.

Zur Lösung der eingangs gestellten Aufgabe ist auch ein Verfahren gemäß Anspruch 9 zum Entfernen einer inneren Umhüllung elektrischer Leiter eines mehradrigen Kabels vorgesehen, vorzugsweise einer zwischen einem Schirm oder einer Isolierung und den inneren Leitern befindlichen Folie. Ein derartiges Verfahren umfasst grundlegend das Klemmen des Kabels und das Einschneiden der inneren Umhüllung.

Erfindungsgemäss wird dabei eine kraftschlüssige Verbindung mit einem Abzugsmittel hergestellt und die ein- oder abgeschnittene Umhüllung anschliessend in Längsrichtung des Kabels abgezogen .

Dabei wird zumindest ein Klebeband auf die ein- oder abgeschnittene Umhüllung angedrückt und anschliessend zusammen mit der ein- oder abgeschnittenen Umhüllung in Längsrichtung des Kabels abgezogen.

Eine weitere vorteilhafte Variante des erfindungsgemässen Verfahrens sieht vor, dass zwei Klebebänder von einander in Bezug auf die Kabelachse entgegengesetzte Seiten aufgebracht werden, wobei die Klebebänder vor dem Andrücken vorzugsweise trichterförmig bereitgehalten und erst anschliessend mittels Führungsbacken an die Umhüllung anliegend angedrückt werden. Vorzugsweise werden unmittelbar vor und während des Abziehens des Klebebandes die Führungsbacken wieder vom Kabel abgehoben, um durch dieses zumindest teilweise Öffnen die Reibung zwischen der abzuziehenden Umhüllung und dem Rest des Kabels zu vermindern, wodurch sich auch eine wesentliche Verminderung der für das Abziehen erforderlichen Kraft erzielen lässt.

Optional kann das Verfahren vorteilhaft derart gestaltet sein, dass eine Überwachung der Art des Klebebandes und/oder von dessen korrektem Abwickeln und/oder vom Erreichen des Endes des Klebebandes stattfindet.

Vorzugweise ist beim erfindungsgemässen Verfahren weiters dafür gesorgt, dass das Kabelende durch eine Umhüllungs-Abschabanordnung und danach durch die Messeranordnung hindurchgeschoben wird, und dass nach dem Schneiden und Abziehen der inneren Umhüllung das Kabel in die Umhüllungs-Abschabanordnung zurückgezogen und nach deren Aktivierung wieder nach vorn gestossen wird.

Um die noch am Kabel verbliebenen Reste der Umhüllung möglichst vollständig zurückstossen zu können, können diese etwas vom Kabel abgehoben werden, wenn eine Verfahrensvariante vorgesehen ist, gemäss der in der Umhüllungs-Abschabanordnung vor oder während des Vorstossens des Kabels in einen Schaberkopf in diesem Schaberkopf ein Überdruck aufgebaut und dadurch zumindest ein Druckluftstoss auf das Kabelende hin gerichtet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Vorrichtung in perspektivischer Darstellung,
- Fig. 2: die Vorrichtung der Fig. 1 in Seitenansicht,
- Fig. 3: eine Ausführungsform des Schaberkopfes einer Umhüllungs-Abschabanordnung, mit geöffneten Formbacken,
- Fig. 4: den Schaberkopf der Fig.3, mit geöffneten Formbacken, von welchen die Schaber abgenommen sind,
- Fig. 5: eine einzelne Formbacke mit Dichtung und Schaber in Explosionsdarstellung,
- Fig. 6a: eine schematische Darstellung der Schaberanordnung in ganz geöffneter Stellung, und
- Fig. 6b: die Schaberanordnung der Fig. 6a in ganz geschlossener Stellung.

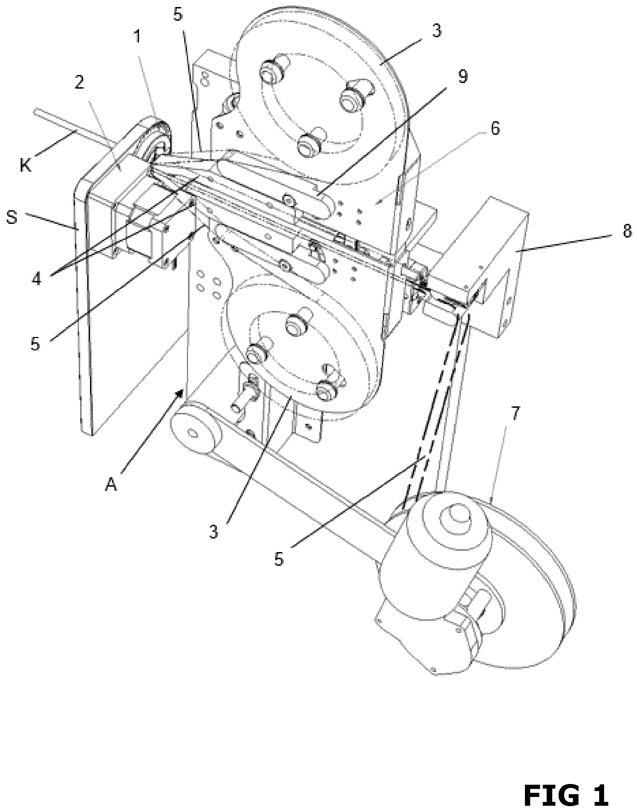

In Fig. 1 ist eine erfindungsgemässe Vorrichtung in ihrer Gesamtheit dargestellt. Sie umfasst in der dargestellten Version die Baugruppen Schneidvorrichtung S mit zumindest einer Halteanordnung bzw.

Klemmvorrichtung zum axialen und rotativen Klemmen des Kabels K (nicht dargestellt), einem Messerrad 1 und dessen Antrieb 2 und einer vorzugsweise in Kabelvorschubrichtung hinter der Schneidvorrichtung S positionierten Abzugsvorrichtung A für die geschnittenen Abschnitte einer Umhüllung innenliegender Elemente des Kabels K. Weiters könnte noch eine Umhüllungs-Abschabanordnung (in Fig. 1 nicht dargestellt) in die Vorrichtung integriert sein, wobei deren vorteilhafte Positionierung in Kabelvorschubrichtung vor der Schneidvorrichtung S,

insbesondere vor dem Messerrad 1, allenfalls auch seitlich davon in unmittelbarer Nähe vorgesehen ist, um möglichst kurze Wege für die Verbringung des zu bearbeitenden Kabelendes zu gewährleisten.

Besonders vorteilhaft ist eine Anordnung, bei welcher das Kabel K zuerst durch eine vollkommen geöffnete Umhüllungs-Abschabanordnung und dann in eine unmittelbar dahinterliegende Schneidvorrichtung S geschoben ist. Nach dem Schneiden der Umhüllung und deren Abziehen muss das Kabel K dann zum Zurückstossen der verbliebenen Reste der Umhüllung nur durch die Schneidvorrichtung S bis zur Abschabanordnung zurückgezogen werden.

Die Abzugsvorrichtung A weist zwei Klebebandrollen 3 auf, sowie zwei Führungsbacken 4 für die Klebebänder 5 auf, welche gemeinsam auf einem parallel zur Längsrichtung des Kabels K verfahrbaren Schlitten 6 angeordnet sind. Der Schlitten 6 trägt weiters auch einen Aufroller 7 für das Klebeband 5 mit den darauf fixierten, abgezogenen Abschnitten der Umhüllung.

Das Messerrad 1 der Schneidvorrichtung S rotiert, angetrieben vom Antrieb 2, um das zentral hindurchgeführte Kabel K und schneidet mittels zumindest einer daran befestigten Klinge im Zuge der Drehbewegung die Umhüllung zumindest über Teile von deren Umfang und zumindest über einen Teil von deren Dicke ein.

Die geschnittenen Abschnitte der Folie werden mittels der Abzugseinrichtung A entfernt. Als Abzugsmittel dienen zwei einander in Bezug auf das Kabel K gegenüberliegende und einander mit den Klebeflächen zugewandten Klebebänder 5, welche von den Klebebandrollen 3 und die Führungs- und Andrückbacken 4 zum Kabel K gelangen. Zu Beginn des Abzugsvorganges sind die beiden Führungsbacken 4 zumindest an ihren vorderen Enden auseinandergefahren. Dadurch bilden die beiden Klebebänder 5 einen Trichter, welcher über das Kabelende bzw. die noch daran anhaftenden Abschnitte der Umhüllung geschoben wird. Entweder während oder nach dem Schneiden der Umhüllung werden die Führungsbacken 4 automatisch gesteuert radial auf das Kabel K hin bewegt, vorzugsweise geschwenkt, wodurch die Klebebänder 5 angedrückt werden. Die Führungsbacken 4 sind dabei als starrer Körper ausgeführt, doch an ihrem am Kabel zur Anlage kommenden vorderen Abschnitt mit einer elastischen Schicht versehen. Eine Herstellung aus Metall mit einer elastischen Einlage in den mit dem Kabel in Kontakt kommenden Bereichen ist eine bevorzugte Ausführungsform. Dabei wird typischerweise auch die Stirnseite der Führungsbacke 4 aus einem Material mit niedrigem Reibungskoeffizienten, beispielsweise dem auf die Stirnseite der Führungsbacke 4 vorgezogenen Material der Führungsbacke 4 selbst, hergestellt sein. An der Vorderseite der Führungsbacke 4 kann ein kleiner Ausschnitt in jenem dem Kabel K am nächsten kommenden Bereich ausgearbeitet sein.

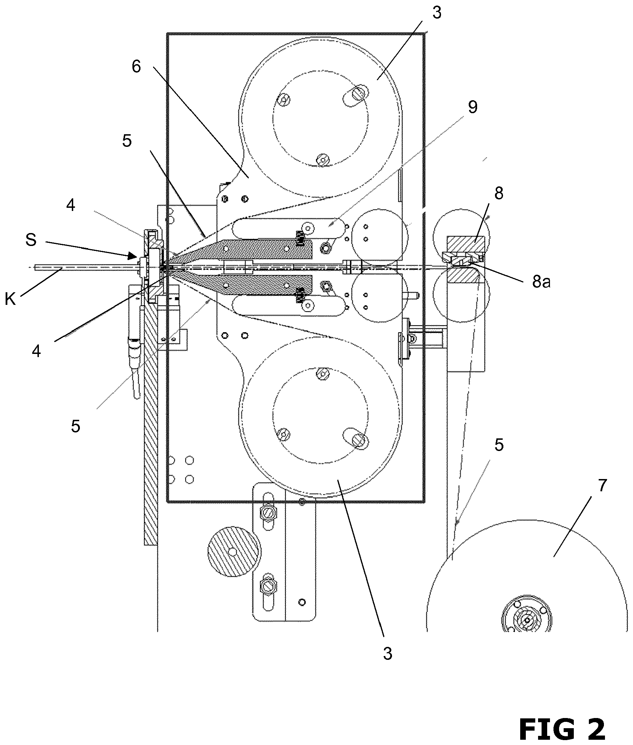

Nach dem Andrücken der Klebebänder 5 an die ab- oder eingeschnittene Umhüllung auf dem Kabel K mittels der vorzugsweise gummierte Bereiche der Führungsbacken 4 wird das Klebeband 5 zusammen mit den daran anhaftenden Abschnitten der Umhüllung in Längsrichtung des Kabels K zurückgezogen. Dazu wird das Abrollen des Klebebandes 5 von den Klebebandrollen 3 unterbunden, beispielsweise die Klebebandrollen 3 arretiert, und der Schlitten 6 wird zusammen mit den Klebebandrollen 3, den Führungsbacken 4 und dem Klebeband 5 vom Kabel K weg zurückgezogen und die geschnittenen Abschnitte der Umhüllung werden dabei von den darunter liegenden Elementen des Kabels K abgezogen, wobei diese Abschnitte zwischen den beiden Klebebändern 5 verbleiben. Das Klebeband 5 mit den Umhüllungsabschnitten wird dabei über eine Klemm- und Umlenkeinheit 8 zum Aufroller 7 geführt und dort zur anschliessenden Entsorgung aufgerollt. Wie in Fig. 2 zu erkennen ist, können Kontrollarme 9 bei jeder Führungsbacke 4 und jedem Klebeband 5 angeordnet sein, um deren Bewegungen bzw. Abrollen zu überwachen.

In der hinteren Stellung des Schlittens 6 wird das Klebeband 5 in der Klemm- und Umlenkeinheit 8 mittels beispielsweise eines Pneumatikzylinders 8a geklemmt, die wieder nach vorne fahrenden, wieder freigegebenen Klebebandrollen 3 werden um die Hublänge abgewickelt, die Führungsbacken 4 öffnen sich wieder. Damit kann der Ablauf für das Abziehen wieder von vorne beginnen.

In einer alternativen Ausführung wird das Klebeband 5 nicht mit einem Pneumatikzylinder 8a geklemmt, sondern zwischen vier Rollen 3 mit Freilauf geführt. Zwei Rollen 3 fahren auf dem Schlitten 6 mit, zwei andere Rollen sind fest montiert. Der Freilauf lässt nur ein Drehen der Rollen in eine Richtung zu. Durch das Vor- und Zurückfahren des Schlittens 6 werden die Klebebänder 5 weitergetaktet.

Für unterschiedliche Kabeltypen können dabei auch unterschiedliche Typen von Klebebändern 5 zum Einsatz kommen. Auch ist es wichtig, das korrekte Abrollen der Klebebänder bzw. den für das Abziehen der geschnittenen Umhüllung ausreichenden Abzugsweg zu überwachen. Zu diesem Zweck werden vorteilhafterweise Klebebänder mit Markierungen wie etwa Balkencodes auf der nicht klebenden Rückseite verwendet. Diese Markierungen können über einen entsprechenden Sensor der Applikationsanordnung, beispielsweise einen Kontrast-Sensor im Fall von Balkencodes, erkannt und in einer Auswerteeinheit verarbeitet werden. Je nach Abzugslänge muss eine entsprechende Anzahl Balken von der Steuerung erkannt werden. Verschiede Klebebandtypen können zur Unterscheidung unterschiedliche Balkenmuster aufgedruckt haben (Prinzip Barcode). Die SensorÜberwachung des Klebebandes, die beispielweise auch über Kameras erfolgen könnte, ermöglicht auch die Erkennung, wann das Bandende erreicht ist und eine neue Klebebandrolle 3 eingesetzt werden muss.

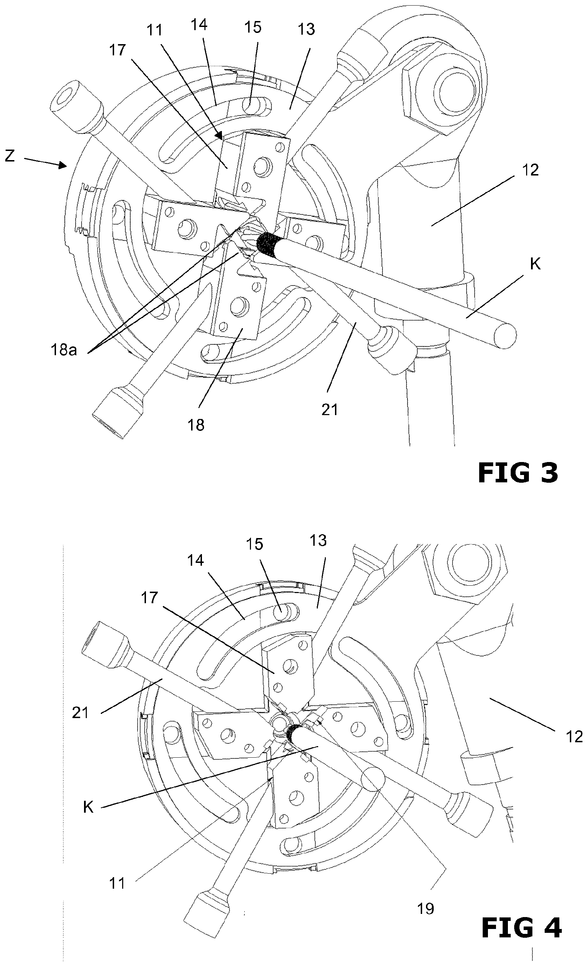

Für manche Kabeltypen ist trotz optimaler Ausführung der Schneidevorrichtung S und der Abzugseinrichtung A keine komplette Entfernung der Umhüllung möglich, so dass noch zwischen jeweils zwei benachbarten Litzen des Kabels ein kleines Dreieck der Folie zurückbleibt. Diese kann dann mittels einer weiteren Einrichtung, einer Umhüllungs-Abschabanordnung in einem weiteren Arbeitsschritt zurückgeschoben werden. Diese in Kabelvorschubrichtung vorzugsweise ummittelbar vor der Schneidevorrichtung S angeordnete Abschabanordnung beinhaltet einen zentrisch um das Kabel schliessenden Schaberkopf Z, der in den Fig. 3 und 4 herausgestellt ist. Das Kabel K wird durch Abschabanordnung sowie die Schneidvorrichtung S hindurchgeführt, vorzugsweise hindurchgeschoben. Nach dem Schneiden der Umhüllung und dem Abzugsvorgang wird das Kabel K in Längsrichtung bis hinter die Abschabanordnung zurückgezogen, der Schaberkopf Z aktiviert und die verbliebenen Reste der Umhüllung mittels einer axialen Bewegung des Kabels K in Längsrichtung auf den vorzugsweise ortsfest verbleibenden Schaberkopf Z - und auch auf die Schneidvorrichtung S hin - zurückgeschabt. Natürlich sind auch Ausführungsformen mit entlang des Kabels K verschiebbarem Schaberkopf Z möglich.

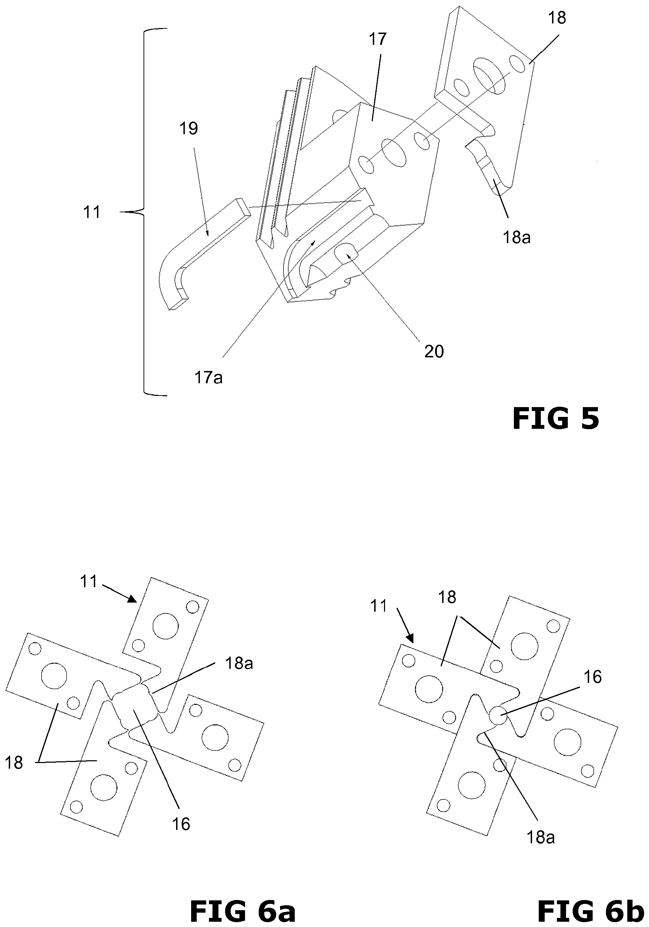

Dieser Schaberkopf Z, ist mit zumindest zwei, in der dargestellten Ausführungsform mit vier, Formbacken 11 versehen, die über einen Betätigungsmechanismus 12, 13, 14, 15 radial auf das Kabel K hin und davon weg bewegt werden können. Dazu greift ein Zapfen 15 der Formbacke 11 in eine sich über einen Teil des Umfangs eines drehbaren Ringes 13 erstreckende spiralförmige Nut 14 ein. Der Ring 13 kann über eine Druck- bzw. Zugstange 12, beispielsweise die Kolbenstange eines ansteuerbaren Fluidzylinders (nicht dargestellt) um eine Achse verdreht werden, welche mit der Achse des Kabels K zusammenfällt. In der innersten Endposition der Formbacken 11 schliessen diese das Kabel K unter Bildung einer vorzugsweise im Wesentlichen runden Durchgangsöffnung 16 (siehe Fig. 6b) im Wesentlichen dicht ein. Die Weite der Durchgangsöffnung 16 ist über den Arbeitshub der Druck- bzw. Zugstange 12 entsprechend auf den Radius des Hüllkreises der inneren, unter der Umhüllung liegenden Elemente des Kabels K einstellbar.

Jede Formbacke 11 besteht vorteilhafterweise aus einem Tragkörper 17 und einem darauf befestigten Schaber 18 oder einem vergleichbaren Bauteil, welches jedenfalls eine scharfe Kante 18a zur Ausübung einer Schabwirkung parallel zum Kabel K aufweist, ohne jedoch das Kabel K zu verletzen. Weiters ist jeder Tragkörper 17 mit zumindest einer auf zumindest eine benachbarte Formbacke 11 gerichtete Dichtung 19 versehen, die in entsprechenden nutartigen Aufnahmen 19a eingesetzt sind.

Bei vollständig auf das Kabel K hin zusammengefahrenen Formbacken 11 kann damit begrenzt durch die Schaber 18, die Tragkörper 17, die Dichtungen 19 und das zentral aufgenommene Kabel K eine das Kabel K umgebende fast luftdichte Kammer gebildet werden. Dabei dichtet vorzugsweise jede Formbacke 11 gegen die nächstliegende Formbacke 11 ab. In die Kammer mündet in jedem Tragkörper 17 eine Blasöffnung 20, durch welche über eine Druckluftzufuhrleitung 21 mit Druckluft versorgt werden kann. Durch zumindest einen Druckluftstoss bei geschlossenen Formbacken 11 werden am Kabel K anliegende Reste der Umhüllung, insbesondere in den Tälern zwischen einzelnen Litzen oder Leitern eines Kabels, abgehoben und können anschliessend einfach und vollständig durch die eng anliegenden Schaber 18 erfasst und zurückgeschoben werden. Damit können alle Kabeltypen befriedigend verarbeitet werden. Die radiale Lage der Formbacken 11 und/oder die Position der Schaber 18 auf den Tragkörpern 17 kann vorteilhafterweise in einem gewissen Bereich justiert werden, beispielsweise mittels einer Justierschraube.

### Liste der Bezugszeichen

- 1: Messerrad
- 2: Antrieb
- 3: Klebebandrolle
- 4: Führungs- und Andrückbacke
- 5: Klebeband
- 6: Schlitten
- 7: Aufroller
- 8: Umlenk- und Klemmmechanismus
- 8a: Pneumatikzylinder
- 9: Kontrollarm
- 11: Formbacke
- 12: Druck/Zug-Stange
- 13: Ring
- 14: Spiralnut
- 15: Zapfen
- 16: zentrale Öffnung
- 17: Tragkörper
- 17a: Aufnahme für Dichtung
- 18: Schaber
- 18a: Kante
- 19: Dichtung
- 20: Blasöffnung
- 21: Druckluftleitung
- S: Schneidvorrichtung
- A: Abzugsvorrichtung für Umhüllung
- Z: Schaberkopf

## Patentansprüche

1. Vorrichtung zum Entfernen einer Umhüllung elektrischer Leiter eines vorzugsweise mehradrigen Kabels (K), vorzugsweise einer zwischen einem Schirm oder einer Isolierung und den inneren Leitern befindlichen Folie,
umfassend eine Schneidvorrichtung mit
zumindest einer Klemmvorrichtung zum axialen und rotativen Klemmen des Kabels (K) entlang einer Längsachse und
einer Messeranordnung (1) für ein Einschneiden in die Umhüllung, umfassend weiterhin eine Abzugseinrichtung (A) für die zumindest teilweise eingeschnittene Umhüllung, welche in die Vorrichtung integriert ist und Abzugsmittel (5) umfasst, die zur kraftschlüssigen Verbindung mit der Umhüllung und zur Ausübung einer Kraft auf die Umhüllung parallel zur Kabelachse entlang der Längsachse ausgelegt sind, und
wobei die Abzugseinrichtung (A)
zumindest eine Applikationsanordnung (3, 4, 6) für jeweils zumindest ein Klebeband (5),
zumindest ein Klebeband (5) als Abzugsmittel, sowie Mittel (6, 7, 8) zum Abziehen des zumindest einen Klebebandes (5) mit anhaftender Umhüllung in der Längsrichtung des Kabels (K) umfasst,
**dadurch gekennzeichnet, dass**
die Messeranordnung (1) um die Längsachse drehbar ist,
die Applikationsanordnung (3, 4, 6) zumindest eine automatisch radial in Bezug auf das entlang der Längsachse verlaufende Kabel (K) hin und vom Kabel (K) weg bewegbare sowie in Längsrichtung des Kabels (K) bewegbare Führungsbacke (4) zum Führen für das Klebeband (5) und zum Andrücken des Klebebandes (5) an die Umhüllung umfasst, und dass die Führungsbacke (4) ein starrer Körper ist, vorzugsweise aus Metall, und an ihrem über das Klebeband (5) am Kabel (K) zur Anlage kommenden Abschnitt mit einer elastischen Schicht, vorzugsweise in Form einer Einlage, angepasst um das Klebeband (5) möglichst grossflächig anzudrücken und dabei das Kabel (K) schonend zu umfassen, versehen ist.

2. Vorrichtung nach Anspruch 1, **dadurch gekennzeichnet, dass** die Stirnseite der Führungsbacke (4) aus einem Material mit niedrigem Reibungskoeffizienten besteht, wozu vorzugsweise das Material der Führungsbacke (4) auf die Stirnseite vorgezogen ist, gegebenenfalls mit Ausnahme eines kleinen Ausschnittes im Bereich des Kabels (K).

3. Vorrichtung nach einem der Ansprüche I oder 2, **dadurch gekennzeichnet, dass** die Mittel zum Abziehen des Klebebands (5) mit anhaftender Umhüllung in der Längsrichtung des Kabels (K) durch die Zuführ- oder Speichereinrichtung (3) für das Klebeband (5) gebildet sind, welche zumindest zeitweise arretierbar oder dauerhaft nur in Zuführrichtung freigegeben ist, sowie durch einen in Längsrichtung des Kabels (K) bewegbaren Schlitten (6), auf welchem die Zuführ- oder Speichereinrichtung (3) angebracht ist.

4. Vorrichtung nach einem der Ansprüche I bis 3, **dadurch gekennzeichnet, dass** die Applikationsanordnung (3, 4, 6) zwei Anordnungen mit Führungsbacke (4) und Zuführ- oder Speichereinrichtung für das Klebeband (5), vorzugsweise in Form von Klebebandrollen (3), auf einander gegenüberliegenden Seiten des entlang der Längsachse verlaufenden Kabels (K) aufweist, welche Applikationsanordnungen für eine Relativbewegung in Bezug auf das entlang der Längsachse verlaufende Kabel (K) in Richtung der Längsachse auf einem entlang der Längsachse vor und zurück verschiebbaren Schlitten (6) montiert ist.

5. Vorrichtung nach einem der Ansprüche 1 bis 4, **dadurch gekennzeichnet, dass** die Applikationsanordnung (3, 4, 6) einen Sensor für Markierungen auf dem Klebeband (5) aufweist, der mit einer Auswerteeinheit für die Sensorsignale verbunden ist.

6. Vorrichtung nach einem der Ansprüche 1 bis 5, **dadurch gekennzeichnet, dass** zusätzlich eine Umhüllungs-Abschabanordnung in die Vorrichtung integriert ist, wobei die Umhüllungs-Abschabanordnung vorzugsweise in Kabelvorschubrichtung vor der Messeranordnung (1) und vorzugsweise die Abzugseinrichtung (A) in Kabelvorschubrichtung hinter der Messeranordnung (1) positioniert sind.

7. Vorrichtung nach Anspruch 6, **dadurch gekennzeichnet, dass** die Abschabanordnung einen Schaberkopf (Z) mit zumindest zwei, vorzugsweise vier, zentrisch um die inneren Leiter des entlang der Längsachse verlaufenden Kabels (K) schliessbare Formbacken (11) aufweist, welche zusammen eine vorzugsweise runde Durchgangsöffnung (16) für die Anordnung der inneren Leiter des Kabels (K) bilden, die auf den Radius von deren Hüllkreis einstellbar ist.

8. Vorrichtung nach Anspruch 7, **dadurch gekennzeichnet, dass** jede Formbacke (11) aus einem Tragkörper (17) und einem darauf befestigten Schaber (18) besteht, wobei jeder Tragkörper (17) zumindest eine auf zumindest eine benachbarte Formbacke (11) gerichtete Dichtung (19) aufweist, derart dass zwischen Schabern (18), Tragkörpern (17), und Dichtungen (19) eine zumindest fast luftdichte Kammer um das entlang der Längsachse verlaufende Kabel (K) gebildet ist, welche mit zumindest einer Druckluftzufuhr (21) verbunden ist.

9. Verfahren zum Entfernen einer inneren Umhüllung elektrischer Leiter eines mehradrigen Kabels (K) unter Verwendung der Vorrichtung nach einem der Ansprüche 1 bis 8, vorzugsweise einer zwischen einem Schirm oder einer Isolierung und den inneren Leitern befindlichen Folie, umfassend
- das Klemmen des Kabels (K) und
- das zumindest teilweise Einschneiden der inneren Umhüllung, wobei
- das zumindest eine als Abzugmittel ausgebildete Klebeband (5) in Bezug auf die Längsachse des Kabels vorgesehen wird,
- die zumindest eine zum Führen des Klebebands (5) vorgesehene Führungsbacke (4), welche das Klebeband (5) automatisch radial in Bezug auf das entlang der Längsachse verlaufende Kabel (K) hin bewegt, und
- das Klebeband (5) auf die zumindest teilweise eingeschnittene Umhüllung angedrückt wird, wobei eine kraftschlüssige Verbindung zwischen dem Klebeband (5) und der zumindest teilweise eingeschnittenen Umhüllung hergestellt wird,
- wobei anschliessend die Führungsbacke (4) das Klebeband (5) in Längsrichtung des Kabels (K) bewegt, und
- die zumindest teilweise eingeschnittene Umhüllung in Längsrichtung des Kabels (K) abgezogen wird.

10. Verfahren nach Anspruch 9, wobei zwei Klebebänder (5) von einander in Bezug auf die Längsachse des Kabels entgegengesetzte Seiten aufgebracht werden, wobei die Klebebänder (5) vor dem Andrücken vorzugsweise trichterförmig bereitgehalten und erst anschliessend mittels Führungsbacken (4) an die Umhüllung anliegend angedrückt werden und vorzugsweise werden die Führungsbacken (4) während des Abziehens des Klebebands (5) mit anhaftender Umhüllung wieder vom Kabel abgehoben.

11. Verfahren nach Anspruch 9 oder 10, wobei eine Überwachung der Art des Klebebandes (5) und/oder von dessen korrektem Abwickeln und/oder vom Erreichen des Endes des Klebebandes (5) stattfindet.

12. Verfahren nach einem der Ansprüche 9 bis 11, wobei das Kabelende durch eine Umhüllungs-Abschabanordnung (Z) und danach durch die Messeranordnung (I) hindurchgeschoben wird, und dass nach dem Schneiden und Abziehen der inneren Umhüllung das Kabel (K) in die Umhüllungs-Abschabanordnung (Z) zurückgezogen und nach deren Aktivierung wieder nach vorn gestossen wird.

13. Verfahren nach Anspruch 12, wobei in der Umhüllungs-Abschabanordnung vor oder während des Vorstossens des Kabels (K) in einen Schaberkopf (Z) in diesem Schaberkopf (Z) ein Überdruck aufgebaut und dadurch zumindest ein Druckluftstoss auf das Kabelende hin gerichtet wird.

## Claims

1. An apparatus for removing a sheath of electrical conductors of a preferably multicore cable (K), preferably a film located between a shielding or an insulation and the inner conductors,
comprising a cutting apparatus with
at least one clamping device for clamping the cable (K) axially and rotationally along a longitudinal axis of the cable, and
a knife arrangement (1) for scoring the sheath,
further comprising a stripping device (A) for the at least partially scored sheath, which device is integrated in the apparatus and comprises stripping means (5) designed to produce a non-positive connection with the sheath and exert a force on the sheath along the longitudinal axis parallel to the cable axis, and
wherein the stripping device (A) comprises
at least one application arrangement (3, 4, 6) for at least one adhesive tape (5),
at least one adhesive tape (5) as stripping means, and
means (6, 7, 8) for stripping the at least one adhesive tape (5) with the sheath sticking to it in the lengthwise direction of the cable (K),
**characterized in that**
the knife arrangement (1) is arranged rotatably around the longitudinal axis,
the application arrangement (3, 4, 6) comprises at least one guide jaw (4) which is automatically movable radially towards the cable (K) extending along the longitudinal axis and away from the cable (K), and is movable in the longitudinal direction of the cable (K), to provide guidance for the adhesive tape (5) and to press the adhesive tape (5) against the sheath, and
that the guide jaw (4) is a rigid body, preferably made of metal, of which a section bears on the cable (K) via the adhesive tape (5), which section is furnished with an elastic layer, preferably in the form of an insert, adapting it to press against the adhesive tape (5) over the largest possible area while gently enclosing the cable (K).

2. The apparatus according to Claim 1, **characterized in that** the front face of the guide jaw (4) consists of a material with a low coefficient of friction, for which purpose the material of the guide jaw (4) is preferably drawn forwards onto the frontal face, optionally with the exception of a small cut-out in the area of the cable (K).

3. The apparatus according to one of Claims 1 or 2, **characterized in that** the means for stripping the adhesive tape (5) with the sheath stuck to it in the longitudinal direction of the cable (K) are formed by the feed or storage device (3) for the adhesive tape (5), which device can be blocked at least temporarily or is released permanently in the feed direction only, and formed by a carriage (6) that is movable in the lengthwise direction of the cable (K) and on which the feed or storage device (3) is mounted.

4. The apparatus according to any one of Claims 1 to 3, **characterized in that** the application arrangement (3, 4, 6) includes two assemblies with guide jaw (4) and feed or storage devices for the adhesive tape (5), preferably in the form of adhesive tape rolls (3), on opposite sides of the cable (K) extending along the longitudinal axis, which application arrangements are mounted on a carriage (6) that is displaceable forwards and backwards along the longitudinal axis in the direction of the longitudinal axis for a relative movement with respect to the cable (K) extending along the longitudinal axis.

5. The apparatus according to any one of Claims 1 to 4, **characterized in that** the application arrangement (3, 4, 6) has a sensor for markings on the adhesive tape (5), which sensor is connected to an evaluation unit for the sensor signals.

6. The apparatus according to any one of Claims 1 to 5, **characterized in that** furthermore an encasing/scraping assembly is integrated in the apparatus, wherein the encasing/scraping assembly is preferably positioned in front of the knife arrangement (1) in the cable advance direction, and the stripping device (A) is positioned behind the knife arrangement (1) in the cable advance direction.

7. The apparatus according to Claim 6, **characterized in that** the scraping device has a scraper head (Z) with at least two, preferably four, form jaws (11) that are closable centrically about the inner conductors of the cable (K) extending along the longitudinal axis, which jaws together form a preferably circular passthrough aperture (16) for the arrangement of the inner conductors of the cable (K), which aperture is adjustable to the radius of the envelope circle thereof.

8. The apparatus according to Claim 7, **characterized in that** each form jaw (11) consists of a support body (17) and a scraper (18) fastened thereto, wherein each support body (17) has at least one seal (19) facing at least one adjacent form jaw (11), in such manner that an at least almost airtight chamber is formed between scrapers (18), support bodies (17) and seals (19) around the cable (K) extending along the longitudinal axis, which chamber is connected to at least one compressed air supply (21).

9. A method for removing an inner sheath of electrical conductors of a multicore cable (K) using the apparatus according to any one of Claims 1 to 8, preferably a film located between a shielding or an insulation and the inner conductors, comprising
- clamping the cable (K) and
- at least partly scoring the inner sheath, wherein
- the at least one adhesive tape (5) designed as stripping means is provided relative to the lengthwise axis of the cable,
- the at least one form jaw (4), provided to guide the adhesive tape (5), automatically moves the adhesive tape (5) radially relative to the cable (K) extending along the longitudinal axis, and
- the adhesive tape (5) is pressed onto the at least partly scored sheath, wherein a non-positive connection is produced between the adhesive tape (5) and the at least partly scored sheath,
- wherein the guide jaw (4) then moves the adhesive tape (5) in the lengthwise direction of the cable (K), and
- the at least partly scored sheath is pulled off in the lengthwise direction of the cable (K).

10. The method according to Claim 9, wherein two adhesive tapes (5) are applied from opposites sides relative to the longitudinal axis of the cable, wherein the adhesive tapes (5) are held in readiness preferably in a funnel shape before being pressed on, and are only subsequently pressed flat against the sheath by means of guide jaws (4), and the guide jaws (4) are preferably lifted off the cable again while the adhesive tape (5) is stripped off together with the sheath stuck to it.

11. The method according to Claim 9 or 10, wherein a monitoring is performed of the type of the adhesive tape (5) and/or of its correct unwinding and/or of reaching the end of the adhesive tape (5).

12. The method according to any one of Claims 9 to 11, wherein the cable end is pushed through an encasing/scraping assembly (Z) and subsequently through the knife arrangement (1), and that after the inner sheath has been cut and stripped, the cable (K) is drawn back into the encasing/scraping assembly (Z) and is then pushed forwards again after the assembly is activated.

13. The method according to Claim 12, wherein before or while the cable (K) is pushed into a scraper head (Z) in the encasing/scraping assembly, an overpressure is built up in said scraper head (Z) and consequently at least one blast of compressed air is directed at the cable end.

## Revendications

1. Dispositif pour retirer une gaine de conducteurs électriques d'un câble de préférence multiconducteur (K), de préférence d'un film se trouvant entre un blindage ou une isolation et les conducteurs intérieurs,
comprenant un dispositif de découpe avec
au moins un dispositif de serrage pour le serrage axial et rotatif du câble (K) le long d'un axe longitudinal et
un agencement de couteau (1) pour une entaille dans la gaine,
comprenant en plus un dispositif d'enlèvement (A) pour la gaine entaillée au moins en partie, lequel est intégré dans le dispositif et comprend des moyens d'enlèvement (5), qui sont conçus pour la liaison par conformité de force avec la gaine et pour exercer une force sur la gaine parallèlement à l'axe de câble le long de l'axe longitudinal, et
sachant que le dispositif d'enlèvement (A) comprend
au moins un système d'application (3, 4, 6) pour respectivement au moins une bande adhésive (5),
au moins une bande adhésive (5) en tant que moyen d'enlèvement, ainsi que
des moyens (6, 7, 8) pour enlever au moins une bande adhésive (5) avec la gaine adhérente dans la direction longitudinale du câble (K),
**caractérisé en ce que**
l'agencement de couteau (1) peut tourner autour de l'axe longitudinal,
le système d'application (3, 4, 6) comprend au moins un mors de guidage (4) mobile automatiquement dans le sens radial par rapport au câble (K) passant le long de l'axe longitudinal et éloigné du câble (K) ainsi que dans le sens longitudinal du câble (K) pour guider la bande adhésive (5) et pour presser la bande adhésive (5) contre la gaine et
**en ce que** le mors de guidage (4) est un corps rigide, de préférence en métal et est doté sur sa section venant en appui sur le câble (K) par le biais de la bande adhésive (5) d'une couche élastique, de préférence sous la forme d'une insertion, adaptée pour comprimer la bande adhésive (5) sur la plus grande surface possible et entourer avec précaution à cet effet le câble (K).

2. Dispositif selon la revendication 1, **caractérisé en ce que** la face avant du mors de guidage (4) est composée d'un matériau avec un faible coefficient de frottement, le matériau du mors de guidage (4) étant préétiré de préférence sur la face avant, le cas échéant à l'exception d'une petite découpe dans la zone du câble (K).

3. Dispositif selon l'une quelconque des revendications 1 ou 2, **caractérisé en ce que** les moyens destinés à enlever la bande adhésive (5) avec la gaine adhérente dans le sens longitudinal du câble (K) sont formés par le dispositif d'alimentation ou de stockage (3) pour la bande adhésive (5), lequel peut être bloqué au moins temporairement ou n'est libéré en permanence que dans le sens d'alimentation ainsi que par un chariot (6) mobile dans le sens longitudinal du câble (K) sur lequel est monté le dispositif d'alimentation ou de stockage (3).

4. Dispositif selon l'une quelconque des revendications 1 à 3, **caractérisé en ce que** le système d'application (3, 4, 6) comporte deux agencements avec mors de guidage (4) et un dispositif d'alimentation ou de stockage pour la bande adhésive (5), de préférence sous la forme de rouleaux de bande adhésive (3), sur les côtés opposés les uns aux autres du câble (K) passant le long de l'axe longitudinal, lequel système d'application est monté sur un chariot (6) déplaçable en avant et en arrière le long de l'axe longitudinal en direction de l'axe longitudinal pour un mouvement relatif par rapport au câble (K) passant le long de l'axe longitudinal.

5. Dispositif selon l'une quelconque des revendications 1 à 4, **caractérisé en ce que** le système d'application (3, 4, 6) comporte un capteur pour les marquages sur la bande adhésive (5), qui est relié à une unité d'évaluation pour les signaux de détection.

6. Dispositif selon l'une quelconque des revendications 1 à 5, **caractérisé en ce qu'**un système de râclage de gaine est intégré dans le dispositif, sachant que le système de de raclage de gaine est positionné de préférence dans la direction d'avance du câble devant l'agencement de couteau (1) et le dispositif d'enlèvement (A) de préférence dans la direction d'avance du câble derrière l'agencement de couteau (1).

7. Dispositif selon la revendication 6, **caractérisé en ce que** le système de de raclage de gaine comporte une tête de raclage (Z) avec au moins deux, de préférence quatre, mors de formage (11) fermables de façon centrée autour des conducteurs intérieurs du câble (K) passant le long de l'axe longitudinal, lesquels forment ensemble une ouverture de passage (16) de préférence ronde pour la disposition des conducteurs intérieurs du câble (K), qui peut être réglée sur le rayon du cercle d'enveloppe.

8. Dispositif selon la revendication 7, **caractérisé en ce que** chaque mors de formage (11) est composé d'un corps de support (17) et d'un grattoir (18) fixé dessus, sachant que chaque corps de support (17) comporte au moins un joint d'étanchéité (19) orienté vers au moins un mors de formage (11) voisin de telle manière qu'entre les grattoirs (18), les corps de support (17) et les joints d'étanchéité (19), il est formé une chambre au moins rapidement hermétique autour du câble (K) passant le long de l'axe longitudinal, laquelle est reliée à au moins une alimentation en air comprimé (21).

9. Procédé pour enlever une gaine intérieure de conducteurs électriques d'un câble multiconducteur (K) en utilisant le dispositif selon l'une quelconque des revendications 1 à 8, de préférence d'un film se trouvant entre un blindage ou une isolation et les conducteurs intérieurs, comprenant
- le serrage du câble (K) et
- l'entaille au moins en partie de la gaine intérieure, sachant
- qu'au moins une bande adhésive (5) constituée comme moyen d'enlèvement est prévue par rapport à l'axe longitudinal du câble,
- au moins un mors de guidage (4) prévu pour guider la bande adhésive (5), lequel déplace automatiquement la bande adhésive (5) dans le sens radial par rapport au câble (K) passant le long de l'axe longitudinal, et
- la bande adhésive (5) est pressée sur la gaine au moins en partie entaillée, sachant qu'une liaison par conformité de force est établie entre la bande adhésive (5) et la gaine au moins en partie entaillée,
- sachant qu'ensuite, le mors de guidage (4) déplace la bande adhésive (5) dans la direction longitudinale du câble (K), et
- la gaine au moins en partie entaillée est enlevée dans la direction longitudinale du câble (K).

10. Procédé selon la revendication 9, sachant que deux bandes adhésives (5) sont appliquées réciproquement par les côtés opposés par rapport à l'axe longitudinal du câble, sachant que les bandes adhésives (5) sont maintenues de préférence en forme d'entonnoir avant la pression et ne sont qu'ensuite pressées adhérant à la gaine au moyen des mors de guidage (4) et les mors de guidage (4) sont de préférence à nouveau relevés du câble pendant l'enlèvement de la bande adhésive (5) avec la gaine adhérente.

11. Procédé selon la revendication 9 ou 10, sachant qu'une surveillance a lieu concernant le type de bande adhésive (5) et/ou l'enroulement correct de celle-ci et/ou l'atteinte de l'extrémité de la bande adhésive (5).

12. Procédé selon l'une quelconque des revendications 9 à 11, sachant que l'extrémité de câble est glissée à travers un système de râclage de gaine (Z) et ensuite à travers l'agencement de couteau (1) et qu'après la découpe et l'enlèvement de la gaine intérieure, le câble (K) est reculé dans le système de raclage de gaine (Z) et après activation de celui-ci à nouveau poussé en avant.

13. Procédé selon la revendication 12, sachant que dans le système de de raclage de gaine une surpression est constituée avant ou pendant l'avancement du câble (K) dans une tête de raclage (Z) dans cette tête de raclage (Z) et qu'au moins une impulsion d'air comprimé est dirigée de ce fait sur l'extrémité du câble.
